# EUROPÄISCHE PATENTANMELDUNG

(11) **EP 1 568 566 A2**
(43) Veröffentlichungstag der Anmeldung: **31.08.2005**
(21) Anmeldenummer: 05090043.0
(22) Anmeldetag: 24.02.2005
(51) Int. Cl.: B62D 1/11, B60R 21/05

(54) **Stossabsorbierende Lenkradanordnung für Kraftfahrzeuge**

(30) Priorität: 27.02.2004 DE 202004003406 U
(71) Anmelder: Takata-Petri AG, 63743 Aschaffenburg (DE)
(72) Erfinder: Sauer, Frank, 63843 Niedernberg (DE); Bauer, Olivier, 63741 Aschaffenburg (DE)
(74) Vertreter: Baumgärtel, Gunnar

(57) **Zusammenfassung**

Die Erfindung betrifft eine Lenkradanordnung für Kraftfahrzeuge, bei der im Crashfall beim Aufschlagen des Fahrers auf das Lenkrad das Verletzungsrisiko verringert wird. Das Skelett der Lenkradanordnung weist einen kompakten Korpus (9) aus verformbarem, energieabsorbierendem Material auf, in dem die Speichen (4,5) des Lenkrades (1) befestigt sind.

## Beschreibung

Die Erfindung betrifft eine Lenkradanordnung nach dem Oberbegriff des Anspruchs 1.

Es sind Lenkradanordnungen für Kraftfahrzeuge bekannt, bei denen im Crashfall beim Aufschlagen des Fahrers auf das Lenkrad bei noch nicht entfaltetem Airbag das Verletzungsrisiko verringert wird. So ist aus der DE 44 06 420 A1 ein Lenkrad bekannt, bei dem die Lenkradspeichen, die die Nabe und den Lenkradkranz verbinden, beim Aufprall eines Fahrers auf den Lenkradkranz verbiegbar sind. Dabei ist der Lenkradkranz aus einer Normalebene relativ zur Nabe in eine Ausweichebene herunterbiegbar. Das wird dadurch erreicht, daß jede hinter der Nabenmittelachse verlaufende Lenkradspeiche über das sie umschließende Polstermittel in geringerem Maße biegeversteift ist als jede vor der Nabenmittelachse verlaufende Lenkradspeiche über ihr Polstermittel. Dadurch wird die Verletzungsgefahr für den aufprallenden Fahrer verringert.

Der Nachteil dieses Lenkrades besteht im erhöhten Aufwand, da Speichen unterschiedllicher Biegesteifigkeit hergestellt werden müssen.

Aus der DE 197 47 873 A1 ist ein Energie absorbierendes Lenkrad bekannt, das aus einem Oberteil mit Lenkradkranz und Speichen und aus einem Unterteil mit der Nabe besteht, wobei das Unterteil als Energie absorbierendes, verformbares Bauteil ausgebildet ist. Zur Erzielung der Energieabsorption weist das Unterteil eine solche Form auf, daß sich Abschnitte verformen können. So kann das Unterteil eine speicheartige Struktur aufweisen, wobei die gewünschte Energieabsorption durch die Zahl, Form und Anordnung der Speichen beeinflußbar ist.

Diese Anordnung weist den Nachteil auf, daß neben den Speichen im Oberteil zusätzliche Speichen im Unterteil vorgesehen sind, die das Lenkrad verteuern.

Der Erfindung liegt die Aufgabe zugrunde, den Fertigungsaufwand für ein Energie absorbierendes Lenkrad zu verringern.

Erfindungsgemäß wird das gemäß den Merkmalen des Anspruchs 1 erreicht.

Bei einer Lenkradanordnung für Kraftfahrzeuge, bei denen im Crashfall beim Aufschlagen des Fahrers auf das Lenkrad das Verletzungsrisiko verringert wird, weist erfindungsgemäß das Skelett der Lenkradanordnung einen kompakten Korpus aus verformbarem, energieabsorbierendem Material auf, in dem die Speichen des Lenkrades befestigt sind. Diese Anordnung weist den Vorteil auf, daß ein solcher Korpus aus verformbarem Material wesentlich preiswerter herstellbar ist, als die beschriebenen Anordnungen des Standes der Technik. Weiterhin ist ein solcher Korpus in jede Richtung verformbar und kann z. B. translatorisch und rotatorisch verformt werden. In Abhängigkeit von der Geschwindigkeit des Fahrzeugs beim Aufprall, von der Positions des Fahrers beim Aufprall und von der Statur des Fahrers, d.h., ob er groß, klein, schwer oder leicht ist, sind unterschiedliche Verformungen möglich.

Mindestens eine Speiche weist einen Speichenkopf auf, der in dem Korpus aus energieabsorbierendem Material eingebettet ist. Ein solcher Speichenkopf sichert den festen Halt der Speiche in dem Korpus.

Vorzugsweise ist der Speichenkopf flach ausgebildet und weist mindestens eine Rippe auf. Vorzugsweise sind auf jeder der sich gegenüberliegenden flachen Seiten des Speichenkopfes zwei sich kreuzende Rippen vorgesehen. Ein solcher flacher Speichenkopf sichert in Verbindung mit mindestens einer Rippe den festen Halt der Speiche im Korpus. In einer weiteren Ausgestaltung ist vorgesehen, daß der Speichenkopf an seinem Ende abgerundet ist und daß die Rippen ebenfalls abgerundet sind und an ihren Enden zumindest nahezu die Dicke des Speichenkopfes aufweisen.

Als energieabsorbierendes Material für den Korpus ist vorzugsweise metallischer Schaum oder Kunststoff-Hartschaum vorgesehen.

Der Korpus weist vorzugsweise ein Mehrfaches der Dicke der Speichen auf, so daß bei einer Verformung des Korpus im Crashfall die Speiche zwar ihre Lage verändert, aber nicht aus dem Korpus ausbricht.

Die Erfindung soll in einem Ausführungsbeispiel anhand von Zeichnungen erläutert werden. Es zeigen:
- Fig.1: die Draufsicht auf ein Lenkrad neuerer Bauart, bei dem der Lenkradkranz oben offen ist, teilweise geschnitten;
- Fig.2: einen Lenkradabschnitt mit einer Speiche mit Speichenkopf;
- Fig.3: eine Seitenansicht des Lenkrades und eines Insassen in der Normalposition;
- Fig.4: eins Seitenansicht des Lenkrades und eines Insassen im Crashfall;
- Fig.5: das Lenkrad nach Fig. 4 in einer vergrößerten Darstellung.

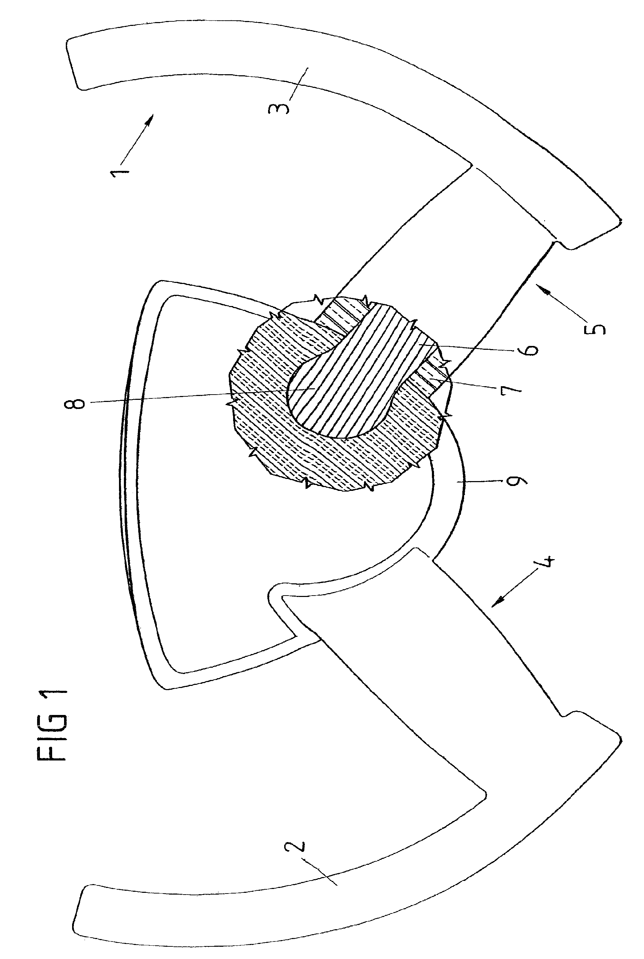

In der Fig. 1 ist ein Lenkrad 1 neuerer Bauart dargestellt, bei dem ein geteilter, oben offener Lenkradkranz mit zwei Lenkradkranzabschnitten 2, 3 vorgesehen ist. Dieses Lenkrad weist zwei Speichen 4, 5 auf, die beide ein Speichenskelett 6 und und eine Schaumverkleidung 7 aufweisen. Das Speichenskelett 6 ist nur in dem Schnitt an der Speiche 5 dargestellt. Das Speichenskelett 6 endet in einem flachen Speichenkopf 8. Mittels dieses Speichenkopfes sind die Speichen 4, 5 in einem Korpus 9 befestigt, der aus einem verformbaren, energieabsorbierenden Material besteht. Im Korpus 9 ist bei diesem Ausführungsbeispiel eine nicht dargestellte Airbageinheit vorgesehen. Ein verformbarer Korpus kann aber auch bei einem Lenkrad ohne Airbageinheit angeordnet sein.

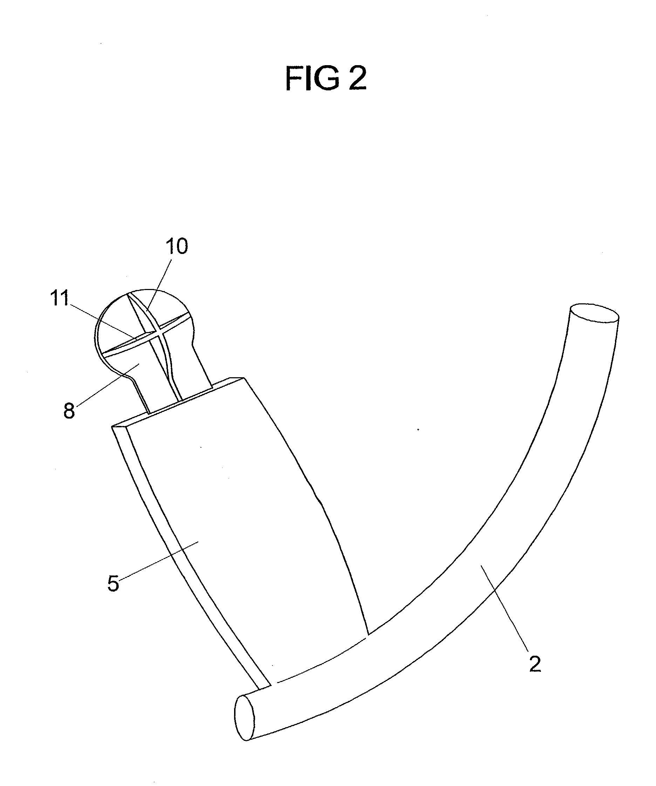

In der Fig. 2 ist die Form des Speichenkopfes 8 detailierter dargestellt. Es ist ersichtlich, daß der Speichenkopf flach ausgebildet ist und daß er zwei sich kreuzende Rippen 10, 11 aufweist, die im Kreuzungsbereich am höchsten sind und zum Rand des Speichenkopfes hin auf die Dicke des flachen Speichekopfes auslaufen. Diese Rippen gewährleisten, daß der Speichenkopf fest im Korpus 9 verankert ist. Auf der Rückseite des flachen Speichenkopfes können ebenfalls sich kreuzende Rippen angeordnet sein.

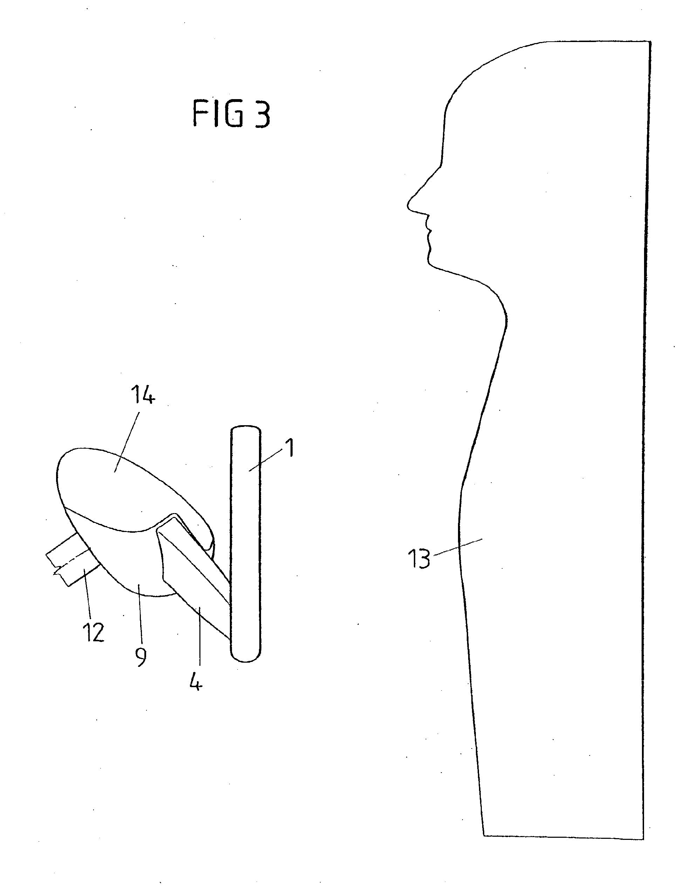

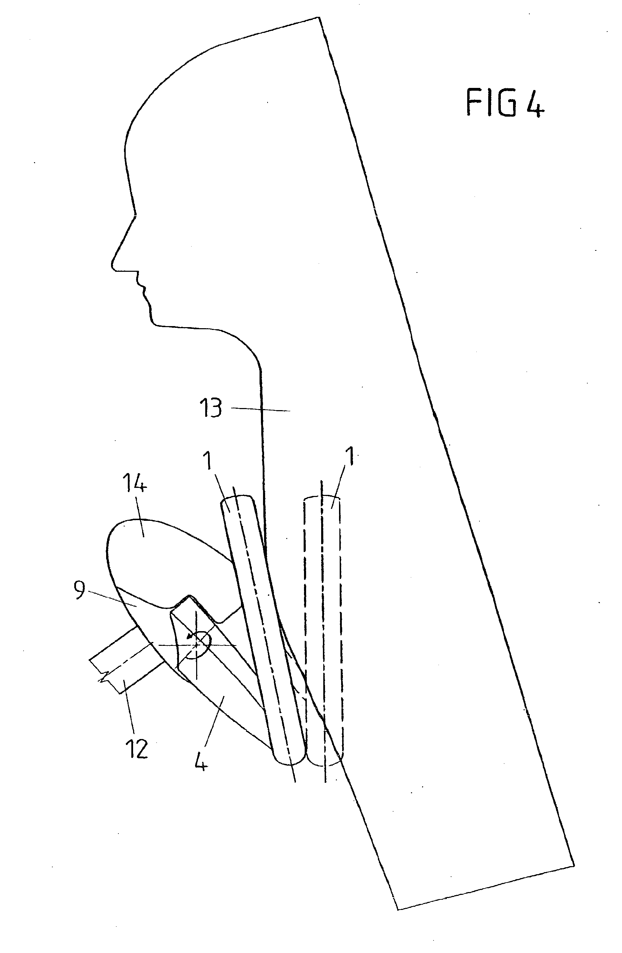

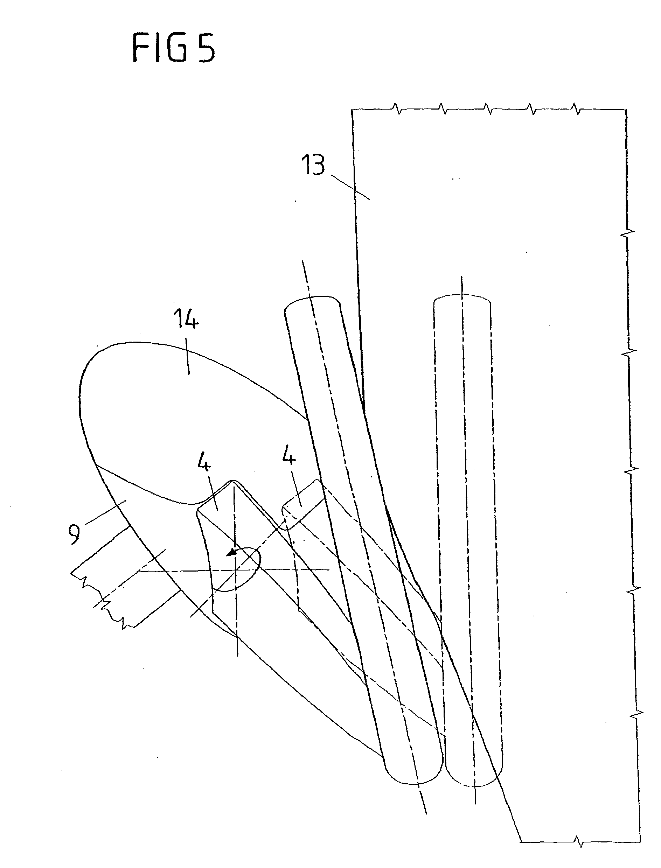

In der Fig. 3 ist die Normalstellung des auf einer Lenksäule 12 befestigten Lenkrades 1 und des Insassen 13 dargestellt. Wenn der Insasse im Crashfall bei ungeöffnetem Airbag einer Airbageinheit 14 gegen das Lenkrad drückt, wie es in der Fig. 4 dargestellt ist, werden die Speichen 4,5 im Korpus 9 in Pfeilrichtung gedreht, wobei der Korpus 9 verformt wird. In der Fig. 4 ist nur die Speiche 4 dargestellt. Wie aus der vergrößerten Darstellung der Fig. 5 erkennbar ist, wird die Speiche 4 im Korpus 9 gleichzeitig verschoben. Das gleiche gilt für die nicht dargestellte Speiche 5. Die gestrichelte Darstellung des Lenkrades 1 und der Speiche 4 zeigt die ursprüngliche Stellung des Lenkrades, während die Darstellung mit durchgehenden Linien die Stellung des Lenkrades 1 und der Speiche 4 nach dem Auftreffen des Insassen auf das Lenkrad 1 zeigt.

Die in den Figuren 4 und 5 dargestellten Verformungen sind nur Beispiele für die vielfältigen Verformungsmöglichkeiten, die mit der erfindungsgemäßen Anordnung möglich sind.

## Patentansprüche

1. Lenkradanordnung für Kraftfahrzeuge, bei denen im Crashfall beim Aufschlagen des Fahrers auf das Lenkrad das Verletzungsrisiko verringert wird,
**dadurch gekennzeichnet,**
**daß** das Skelett der Lenkradanordnung einen kompakten Korpus (9) aus verformbarem, energieabsorbierendem Material aufweist, in dem die Speichen (4, 5) des Lenkrades (1) befestigt sind.

2. Lenkradanordnung nach Anspruch 1, **dadurch gekennzeichnet, daß** mindestens eine Speiche (4) einen Speichenkopf (8) aufweist, der in dem Korpus (9) aus energieabsorbierendem Material eingebettet ist.

3. Lenkradanordnung nach Anspruch 2, **dadurch gekennzeichnet, daß** der Speichenkopf (8) flach ausgebildet ist und mindestens eine Rippe (10, 11) aufweist.

4. Lenkradanordnung nach Anspruch 3, **dadurch gekennzeichnet, daß** auf jeder der sich gegenüberliegenden flachen Seiten des Speichenkopfes zwei sich kreuzende Rippen (10, 11) vorgesehen sind.

5. Lenkradanordnung nach Anspruch 3 oder 4, daß der Speichenkopf (8) an seinem Ende abgerundet ist und daß die Rippen (10, 11) ebenfalls abgerundet sind und an ihren Enden zumindest nahezu die Dicke des Speichenkopfes (8) aufweisen.

6. Lenkradanordnung nach mindestens einem der vorhergehenden Ansprüche, **dadurch gekennzeichnet, daß** als energieabsorbierendes Material metallischer Schaum oder Kunststoff-Hartschaum verwendet wird.

7. Lenkradanordnung nach mindestens einem der vorhergehenden Ansprüche, **dadurch gekennzeichnet, daß** der Korpus (9) ein Mehrfaches der Dicke der Speichen (4, 5) aufweist.
